(19) Europäisches Patentamt
European Patent Office
Office européen des brevets

(11) Veröffentlichungsnummer: **0 306 785 B1**

(12) **EUROPÄISCHE PATENTSCHRIFT**

(45) Veröffentlichungstag der Patentschrift: **21.04.93**

(21) Anmeldenummer: **88114010.7**

(22) Anmeldetag: **27.08.88**

(51) Int. Cl.[5]: **C08L 25/02**, C08L 33/10, B32B 27/30, G02B 6/02, //(C08L25/02,33:10),(C08L33/10, 25:02)

# (54) Verträgliche Polymermischungen (I).

(30) Priorität: **08.09.87 DE 3730025**

(43) Veröffentlichungstag der Anmeldung: **15.03.89 Patentblatt 89/11**

(45) Bekanntmachung des Hinweises auf die Patenterteilung: **21.04.93 Patentblatt 93/16**

(84) Benannte Vertragsstaaten: **BE DE ES FR GB NL SE**

(73) Patentinhaber: **Röhm GmbH**
**Kirschenallee Postfach 4242**
**W-6100 Darmstadt 1(DE)**

(72) Erfinder: **Siol, Werner, Dr.**
**Goerdelerweg 34**
**W-6100 Darmstadt-Eberstadt(DE)**
Erfinder: **Terbrack, Ulrich**
**Berliner Strasse 3**
**W-6107 Reinheim 2(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services
(3.10/3.5x/3.0.1)

## Beschreibung

Gebiet der Erfindung

Die Erfindung betrifft verträgliche Polymermischungen aus mindestens zwei verschiedenen Polymerkomponenten, wobei die eine Polymerkomponente P1 Polystyrol, die andere Polymerkomponente P2 ein Copolymeres aus Estern der Methacrylsäure darstellt.

Stand der Technik

In der Regel gelten unterschiedliche Polymerspecies als nicht miteinander verträglich, d.h. unterschiedliche Polymerspecies bilden bis hinab zu geringen Anteilen einer Komponente im allgemeinen keine homogene Phase aus, die durch völlige Mischbarkeit der Komponenten charakterisiert wäre.
Gewisse Ausnahmen von dieser Regel haben zunehmendes Interesse speziell bei den mit der theoretischen Deutung der Phänomene befaßten Fachleuten hervorgerufen.

Völlig kompatible Mischungen von Polymeren zeigen völlige Löslichkeit (Mischbarkeit) in allen Mischungsverhältnissen. Zum Nachweis der Mischbarkeit wurde häufig die Glastemperatur Tg oder die sogenannte "Optische Methode" (Klarheit eines aus homogener Lösung des Polymergemischs gegossenen Films) herangezogen. (Vg. Brandrup-Immergut, Polymer Handbook, 2. Ed., III-211-213; Kirk-Othmer, Encyclopedia of Chemical Technology, 3rd Ed. Vol. 18, 443 - 478, J. Wiley & Sons 1982).

Als Beispiele für nahezu völlige Unverträglichkeit können die Polymeren Polystyrol und Polymethylmethacrylat (PMMA) gelten. (Vgl. O.Olabisi, L.M. Robeson, M.T. Shaw, Polymer-Polymer Miscibility, Academic Press 1979, pg. 4 ff). So wird für PMMA mit einem Molekulargewicht von 160 000 nur eine Mischbarkeit bis zu Anteilen von 3,5 ppm PMMA in Polystyrol beobachtet (vgl. M.T. Shaw et al., Adv. Chem. Ser. 1984, 206, 33 - 42). Gleichfalls unverträglich ist Polystyrol mit Polyethyl-, Polypropyl-, Polybutyl-, Polyhexyl-, Polydecylmethacrylat sowie mit anderen Polymethacrylsäureestern wie Poly-3,3,5-trimethylcyclohexylmethacrylat und Polyisobornylmethacrylat (vgl. die unveröffentlichte deutsche Anmeldung P 36 32 369.1). Eine Ausnahme bildet lediglich Polycyclohexylmethacrylat, das mit Polystyrol in jedem beliebigen Mischungsverhältnis im gesamten meßtechnisch zugänglichen Temperaturbereich verträglich ist.

Aufgabe und Lösung

Mechanische Abmischungen von Polymeren (Polyblends) haben in bestimmten Fällen und auf bestimmten Gebieten der Kunststoffindustrie zu eigenschaftsmäßig verbesserten Kunststoffprodukten geführt. (Vgl. Kirk-Othmer, 3rd. Ed. Vol. 18, loc.cit pp 443 - 478) Die physikalischen Eigenschaften solcher "Polyblends" stellen gewöhnlich einen Kompromiß dar, der unter dem Strich eine Verbesserung gegenüber den Eigenschaften der individuellen Polymeren bedeuten kann. Als Beispiel für verträgliche Polyblends von industrieller Bedeutung sei das System Poly(2,6-dimethyl-1,4-polyphenylenoxid)/Polystyrol genannt, wobei die Polyphenylenoxid-Komponente Vorteile bezüglich einer erhöhten Glastemperatur Tg und verbesserter Schlagzähigkeit enbringt, während die Polystyrolkomponente es erlaubt, den Preis der Produkte zu erniedrigen. Durch den Polystyrolzusatz wird auch die Verarbeitungstemperatur des Polyphenylenoxids reduziert. (Vgl. O. Olabisi, L.M. Robeson und M.T. Shaw, Polymer-Polymer Miscibility, Academic Press 1979, pg 14 - 15). Allerdings haben **multiphasische** Polymerischungen eine ungleich größere kommerzielle Bedeutung erlangt als verträgliche Mischungen (vgl. Kirk-Othmer loc.cit. pg. 449) Multiphasische (unverträgliche) Polymermischungen einerseits und verträgliche Polymermischungen andererseits sind somit hinsichtlich ihrer physikalischen, insbesondere ihrer anwendungstechnisch relevanten, speziell ihrer optischen Eigenschaften (Transparenz, Klarheit usw.) streng auseinanderzuhalten. Verträgliche Polymere unterscheiden sich wie bereits ausgeführt in relevanter Weise von den multiphasischen Mischungen beispielsweise durch das Vorhandensein einer einzigen Glastemperatur Tg, wobei die Glastemperatur bekanntlich auf andere Eigenschaften wie den Temperaturverlauf des Schubmoduls, Zeitstandseigenschaften, Viskosität, Kristallisationsverhalten der Kunststoffe u.ä. Auswirkungen haben kann. (Vgl. O.Olabisi et al. loc.cit pg. 321-358). Andererseits setzt, wie bereits ausgeführt, mangelnde Verträglichkeit nicht selten dem Vorhaben, dadurch ein verbessertes Gesamt-Eigenschaftsspektrum bei Kunststoffen zu erreichen, enge Grenzen.

Es wurde nun gefunden, daß überraschenderweise die vollständige Unverträglichkeit von Polyalkylmethacrylaten mit Polystyrol dann nicht gegeben ist, wenn man definierte, ausgewählte Alkylmethacrylatmonomere in bestimmten, exakt abgrenzbaren Verhältnissen miteinander copolymerisiert.
Die Erfindung betrifft somit verträgliche Polymermischungen PM bestehend aus

(I) 0,1 - 99,9 Gew.-%, vorzugsweise 30,0 - 99 Gew.-%, insbesondere 40 - 90 Gew.-% eines Polymerisats P1, das aus Monomeren der Formel I

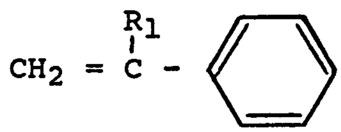

I

worin $R_1$ für Wasserstoff oder einen Methylrest steht, aufgebaut ist und aus
(II)99,9 - 0,1 Gew.-%, vorzugsweise 70 - 1 Gew.-%, insbesondere 60 - 10 Gew.-% eines Copolymeren P2, das aus
30 - 90 Gew.-Teilen eines Methacrylatmonomeren der Formel II

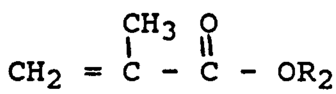

II

worin $R_2$ für Methyl oder Ethyl (vorzugsweise Methyl) steht und aus
70 - 10 Gew.-Teilen eines Methacrylatmonomeren der Formel III

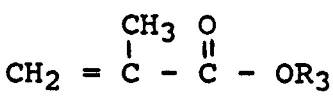

III

worin $R_3$ für einen Kohlenwasserstoffrest mit 3 bis 24 Kohlenstoffatomen, vorzugsweise mit 4 bis 18 Kohlenstoffatomen steht mit der Maßgabe, daß $R_3$ nicht für einen Cyclohexylrest stehen soll und aus
0 - 10, vorzugsweise 1 - 10 Gew.-Teilen eines weiteren, mit den Monomeren der Formel II und III copolymerisierbaren Monomeren M,
aufgebaut ist, das nicht Cyclohexyl(meth)acrylat ist.

Die Anteile der Monomeren der Formeln II, III und M ergänzen sich jeweils zu 100 Gewichtsteilen.
Im allgemeinen steht $R_3$ für einen gegebenenfalls verzweigten, vorzugsweise aber linearen unverzweigten Alkylrest oder einen gegebenenfalls substituierten Cycloalkylrest (mit Ausnahme des Cyclohexylrests) mit mindestens 3 und bis zu 24, vorzugsweise 4 bis 18 Kohlenstoffatomen, mit der Maßgabe, daß mit steigender C-Zahl des Restes $R_3$ der relative Anteil der Monomeren III am Copolymeren P2 abnehmen soll, d.h. der relative Anteil der Monomeren verhält sich gegenläufig zur Zahl der C-Atome im Rest $R_3$.
Der für das Cyclohexylmethacrylat ausgesprochene Disclaimer ist darin begründet, daß für dieses Monomere ganz andere, von der vorliegenden Lehre abweichende Gesetzmäßigkeiten gelten.

Als Bemessungsregel für den Anteil der Monomeren der Formel III am Copolymerisat P2 kann gelten:

$$\text{Gew.-\% Monomer gemäß Formel III} = \frac{\text{Molekulargewicht des Monomeren Formel II}}{\text{Molekulargew. Mon. Formel II + Mol.-Gew.Mon.Formel III}} \cdot 100$$

Die erfindungsgemäß gefundene Verträglichkeit kommt umso unerwarteter als - wie bereits ausgeführt - beispielsweise Polymethylmethacrylat bzw. Polybutylmethacrylat mit Polystyrol unverträglich sind. Dagegen ist ein Copolymer gemäß der vorliegenden Erfindung aus 50 Gew.-% Methylmethacrylat und 50 Gew.-% Butylmethacrylat mit Polystyrol in allen Mischungsverhältnissen verträglich. (Vgl. nachfolgende Tabelle 1). Ebenso sind z.B. Copolymere der Zusammensetzung: 70 Gew.-% Methylmethacrylat, 30 Gew.-% n-Decylmethacrylat in jedem Verhältnis mit Polystyrol verträglich (vgl. nachfolgende Tabelle 2). Weitere Polystyrolverträgliche Kombinationspartner ergeben sich aus den Patentansprüchen, wobei besondere Beachtung verdient, daß gerade die technisch interessanten polystyrolreichen Mischungen gute Verträglichkeit zeigen. Dabei ergibt sich für spezifische Comonomerpartner eine abgrenzbare Comonomerzusammensetzung, für die Verträglichkeit des jeweiligen Copolymeren mit Polystyrol gefunden wird. Die Verhältnisse

zeigen also eine gewisse Analogie zu den bekannten "Mischbarkeitsfenstern" im System Styrol-Acrylnitril-Copolymere (SAN)/PMMA.
Für das Auftreten eines solchen "Mischbarkeitsfensters" im System Polystyrol/Methacrylsäureester-copolymere ist nach den vorliegenden Beobachtungen eine deutliche Differenzierung in der Kettenlänge der Alkylreste der copolymerisierten Methacrylsäureester von Bedeutung. Wie die Ergebnisse in Tabelle 1 zeigen, ist ein Unterschied von 3 Kohlenstoffatomen im Alkylrest (z.B. Methyl im Vergleich mit Butyl) ausreichend zur Ausbildungen eines Mischbarkeitsfensters.
So sind Polymethylmethacrylat und Polybutylmethacrylat mit Polystyrol unverträglich, Copolymere aus beispielsweise 40 - 50 Gew.-% Methylmethacrylat und 60 - 50 Gew.-% Butlymethacrylat sind demgegenüber mit Polystyrol sehr gut verträglich. Demgegenüber sind Copolymere aus 2 Monomeren mit nur 1 Kohlenstoffatom Unterschied im Alkylrest ($R_2$ = Methyl, $R_3$ = Ethyl) nicht mit Polystyrol verträglich (siehe Tabelle 3).
Verträglichkeit wird auch bei Copolymeren aus Methylmethacrylat ($R_2$ = Methyl) und Hexylmethacrylat ($R_3$ = Hexyl) gefunden. Besonders gute Verträglichkeit wird hier bei Copolymeren aus 60 % Methylmethacrylat und 40 % Hexylmethacrylat gefunden. Copolymere der Zusammensetzung 20 - 80 oder 80 - 20 sind demgegenüber nicht so gut mit Polystyrol verträglich (siehe Tabelle 4)
Bei Copolymeren aus Monomeren ($R_2$ = Methyl; $R_3$ = Decyl) wird optimale Mischbarkeit mit Polystyrol dagegen bei einem Verhältnis von 70 Gew.-% Methylmethacrylat und 30 Gew.-% Decylmethacrylat gefunden (siehe Tabelle 2). Insgesamt zeigen die Ergebnisse, daß um polystyrolverträgliche Copolymerzusammensetzungen zu erreichen der Anteil an Comonomeren mit längerkettigem Alkylrest im Copolymeren P2 umso kleiner sein muß, je größer die Alkylkette des betreffenden Methacrylsäureesters ist. So wird für das Copolymer aus Methylmethacrylat und Butylmethacrylat gute Polystyrolverträglichkeit bei einem Comonomerverhältnis von 50 : 50 gefunden; bei Methylmethacrylat-Decylmethacrylatcopolymeren ist die Verträglichkeit mit Polystyrol dagegen bei einem Comonomerverhältnis 70 : 30 optimal.
Für Copolymere aus Methylmethacrylat und dem Methacrylsäureester aus der Mischung von langkettigen sogenannten Talgfettalkoholen ($C_{12}$ - $C_{20}$, durchschnittliche C-Zahl 16,8 - 17,7) wird Polystyrolverträglichkeit bereits bei einem Anteil von nur 20 Gew.-% des langkettigen Esters gefunden. Vergleichbare Ergebnisse werden im System aus Methacrylatcopolymeren und Poly-$\alpha$-methylstyrol gefunden. Auch hier zeigt sich weitaus bessere Verträglichkeit mit einem System aus den Copolymerisaten und Poly-$\alpha$-methylstyrol als in einem System aus dem Homopolymeren und Poly-$\alpha$-methylstyrol.

Kriterien der Verträglichkeit

Definitionsgemäß handelt es sich bei den erfindungsgemäßen Polymermischungen PM um **verträgliche** Mischungen.
Im Sinne der vorliegenden Erfindung und im Einklang mit den in der Praxis der Polymerchemie üblichen Vorstellungen und Definitionen sollen unter verträglichen Mischungen stabile, homogene Mischungen verstanden werden, die makroskopisch die Eigenschaften eines **einphasigen** Materials aufweisen. (Vgl. Kirk-Othmer, Vol. 18, loc.cit. pg 446, 457 - 60; Brandrup & Immergut, "Polymer Handbook" loc.cit. III - 211).
Als Kriterien für die Verträglichkeit (Kompatibilität) seien - im Einklang mit den Standardtexten - betrachtet:
I) Die Beobachtung der Glastemperatur Tg.
Sofern die Polymerkomponenten Glastemperaturen besitzen, die weit genug auseinanderliegen um durch "Differential Scanning Calorimetry" (DSC), dilatometrisch, dielektrisch oder radioluminiszenzspektroskopisch unterschieden zu werden, zeigt sich vorhandene Verträglichkeit durch eine Verschiebung oder durch das Verschwinden der Tg's der Polymer-Einzel-Komponenten an. (Vgl. Olabisi et al. in Polymer-Polymer-Miscibility, loc.cit. pp 21, 123). Im allgemeinen liegt die Glastemperatur bei den erfindungsgemäßen Polymermischungen PM bei Polystyrol als Polymerkomponente P1 < 120 Grad C, bei $\alpha$-methylstyrolreicher Polymerkomponente P1 < 150 Grad C. Bevorzugt sind jedoch Polymermischungen, die Polystyrol als Polymerkomponente P1 aufweisen und eine Glastemperatur < 100 Grad C aufweisen.
II) Die "optische Methode".
Dabei wird aus einer homogenen Lösung der Polymerkomponenten ein Film ausgegossen, der nach dem Trocknen auch bei Vergrößerung keine optisch wahrnehmbare Inhomogenität aufweisen darf.
III)Als ein weiterer Test auf die Mischbarkeit von unter sich verschiedenen Polymeren wird das Auftreten der unteren kritischen Lösungstemperatur (Lower Critical Solution Temperature =LCST) herangezogen. (Vgl. DE-A 34 36 476.5 und DE-A 34 36 477.3).
Das Auftreten der LCST beruht auf dem Vorgang, daß sich beim Erwärmen die bis anhin klare, homogene Polymermischung in Phasen auftrennt und optisch trübe bis opak wird. Dieses Verhalten stellt

nach der Literatur einen eindeutigen Beweis dafür dar, daß die ursprüngliche Polymermischung aus einer einzigen, im Gleichgewicht befindlichen homogenen Phase bestanden hatte.

Das Polymerisat P1

Das Polymerisat P1 wird in an sich bekannter Weise durch Polymerisation der Monomeren der Formel I hergestellt: (Vgl. R. Vieweg, G. Daumiller, Kunststoff-Handbuch, Band V, "Polystyrol", C. Hanser-Verlag 1969; Ullmann's Encyclopädie der Techn. Chemie, 4. Auflage, Bd. 19, pg. 265- 268, Verlag Chemie; Houben-Weyl, 4. Auflage Bs. XIV/1 Georg Thieme 1961 pg 753 - 841.) Nach den bisher vorliegenden Erfahrungen ist die Qualität der verwendeten Polymerisate P1 **nicht** kritisch für die Ausführbarkeit und die vorteilhaften Wirkungen der vorliegenden Erfindung. Es können z.B. Polystyrole im Molekulargewichtsbereich 10 000 bis 1 000 000 angewendet werden. Styrol kann radikalisch, anionisch, kationisch oder koordinativ polymerisiert werden, vorzugsweise wird jedoch radikalisch polymerisiert. Die Polymerisation kann dabei thermisch oder vorzugsweise durch Zusatz von Radikal-Initiatoren in Gang gesetzt werden. Die technische Herstellung bedient sich ganz überwiegend der Polymerisation in Masse oder in Suspension.

Als Initiatoren kommen die üblichen infrage, beispielsweise Azoverbindungen oder Perverbindungen, gegebenenfalls auch Redoxinitiatoren, wobei die Initiatormenge im allgemeinen im Bereich 0,05 bis 2 Gew.-% bezogen auf die Monomeren liegt. Durch die Wahl des Initiators kann man im gesamten Temperaturbereich eine hinreichende Polymerisationsgeschwindigkeit sicherstellen. Während bei Polystyrol als Polymerisat P1 in einer bevorzugten Ausführungsform von einem Homopolymeren ausgegangen wird (also Homopolystyrol), wird bei einem Einsatz von Poly-α-methylstyrol als Polymerisat P1 in der Regel von Copolymeren ausgegangen. Ein solches bevorzugtes Copolymeres ist beispielsweise ein Copolymeres aus Styrol und α-Methylstyrol.

Das Copolymerisat P2

Die Copolymerisate P2 können in an sich bekannter Weise aus den Monomeren der Formeln II, III und gegebenenfalls M, im allgemeinen durch radikalische oder Group-Transfer-Polymerisation hergestellt werden. (Vgl. H. Rauch-Puntigam, Th. Völker Acryl- und Methacrylverbindungen, Springer-Verlag 1967; Houben-Weyl, 4. Auflage Bd. XIV/1 loc.cit pg 1010 ff.) Die Polymerisation kann in Masse, in Suspension, in Emulsion oder in Lösung erfolgen. Bei der radikalischen Polymerisation finden vorzugsweise die üblichen radikalischen Initiatoren, beispielsweise peroxidische, insbesondere organische Peroxidverbindungen wie Dibenzoylperoxid oder Dilauroylperoxid, Azoverbindungen wie Azodiisobutyronitril oder gegebenenfalls Redoxinitiatoren in Mengen von gewöhnlich ca. 0,01 bis 2 Gew.-% (bezogen auf die Monomeren) Anwendung. Die Startradikale können jedoch auch durch energiereiche Strahlung erzeugt werden. Als Regler können z.B. die üblichen Schwefelregler, insbesondere Mercaptoverbindungen verwendet werden. Das Molekulargewicht der Polymerisate P2 hat nach den vorliegenden Beobachtungen keinen eindeutig limitierenden Einfluß auf die Verträglichkeit (wobei aber auch hier die schon früher aufgestellte Regel gilt, daß mit steigendem Molekulargewicht der Polymeren die Verträglichkeit mit fremden Polymeren tendenziell abnimmt).

Im allgemeinen besitzen die Copolymerisate ein Molekulargewicht Mw (Bestimmung durch Lichtstreuung) im Bereich 5 000 bis 1 000 000; vorzugsweise 10 000 bis 200 000. Die Uneinheitlichkeit liegt im allgemeinen im Bereich 0,1 bis 10.

Genannt seien Copolymerisate P2, die zu 30 - 90 Gew.-% aus den Monomeren der Formel II und zu 70 - 10 Gew.-% aus den Monomeren der Formel III aufgebaut sind, worin $R_3$ für einen linearen Alkylrest wie n-Butyl, n-Hexyl, n-Decyl sowie die Alkylreste der Talgfettalkohole steht, daneben solche, in denen $R_3$ für einen n-Pentyl-, n-Hexyl-, n-Octyl-, Ethylhexyl, n-Dodecyl-, n-Hexadecyl-, Stearyl-rest steht. Ebenso kann $R_3$ für einen gegebenenfalls substituierten Cyclohexylrest - nicht jedoch für Cyclohexyl - mit 5 - 15 Kohlenstoffatomen stehen. Als Comonomere M, die gegebenenfalls in Mengen von 0 bis 10 Gew.-Teilen, vorzugsweise 2 bis 8 Gew.-Teilen vorhanden sein können, seien z.B. Monomere der Formel IV

$$CH_2 = \overset{\displaystyle R}{\overset{|}{C}} - Q \qquad IV$$

worin R Wasserstoff, H oder $CH_3$ und Q einen Rest $-COOR_4$ bedeutet, wobei $R_4$ für Wasserstoff oder ein Kation, insbesondere ein Alkalikation wie Natrium oder Kalium oder ein Ammoniumkation oder einen mit

einer Hydroxygruppe oder einer Gruppe $-NR_5R_6$, worin $R_5$ und $R_6$ unabhängig voneinander für einen Alkylrest mit 1 bis 6 Kohlenstoffatomen stehen oder unter Einbeziehung des Stickstoffs einen 5- oder 6-gliedrigen Ring bilden, vorzugsweise endständig substituierten Alkylrest mit 1 bis 6 Kohlenstoffatomen steht oder,
$R_4$ sofern R für Wasserstoff steht, einen Alkylrest mit 1 bis 24 Kohlenstoffatomen, vorzugsweise 1 bis 12 Kohlenstoffatomen oder worin
Q einen Rest

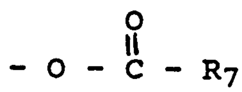

bedeutet, worin $R_7$ für einen Alkylrest mit 1 bis 3 Kohlenstoffatomen steht oder worin Q einen Phenylrest bedeutet, genannt. Erwähnt seien z.B. die (Meth)acrylsäure bzw. Salze derselben sowie die Hydroxyalkylester der (Meth)acrylsäure sowie die Aminoalkylester der (Meth)acrylsäure.

Herstellung der Polymermischungen PM

Die verträglichen Mischungen PM können durch die unterschiedlichen Verfahren hergestellt werden, sie werden z.B. durch intensives mechanisches Vermischen der Komponenten P1 und P2 in der Schmelze, im Extruder usw. erzeugt: oder sie können auch aus einem gemeinsamen Lösungsmittel heraus als sogenannte "solution cast polyblends" hergestellt werden. (Vgl. Kirk-Othmer "Encyclopedia of Chemical Technology" 3rd. Ed. Vol. 18, pg. 443 - 478, J. Wiley, 1982). Auch kann so vorgegangen werden, daß Polymer P1 in der Monomermischung des anderen Polymeren P2 aufgelöst wird und anschließend P2 in Gegenwart von Polymer P1 erzeugt wird. Umgekehrt kann natürlich auch Polymer P1 in Gegenwart des Polymeren P2 erzeugt werden. Ebenso kann die Polymermischung PM aus gemeinsamen Fällungsmitteln erzeugt werden. Der Mischungsart sind keine Grenzen gesetzt.
Man erzeugt in der Regel zunächst Mischungen der Komponenten P1 und P2, wobei vorteilhaft von Feststoffen in Form beispielsweise eines Perlpolymerisats oder eines Granulats ausgegangen wird unter Verwendung langsam laufender Mischaggregate wie z.B. Trommel-, Rhönrad-, Doppelkammer-Pflugscharmischern. Die langsam laufenden Mischaggregate verursachen ein mechanisches Mischen, ohne daß in der Regel die Phasengrenzen aufgehoben werden. (Vgl. Ullmanns Encyklopädie der Technischen Chemie, 4. Auflage, Bd. 2, pg. 282 - 311, Verlag Chemie).
Anschließend erfolgt die thermoplastische Aufbereitung durch homogenes Mischen in der Schmelze unter Verwendung von heizbaren Mischaggregaten bei den dafür geeigneten Temperaturen z.B. 150 bis ca. 300 Grad C in Knetern oder vorzugsweise Extrudern, z.B. Ein- oder Mehrschneckenextrudern oder gegebenenfalls in Extrudern mit oszillierender Schnecke und Scherstiften (z.B: im BUSSCO-Kneter).
Man kann nach diesen Verfahren Gleichkorngranulate (z.B. Heißabschlag, Würfelform, Rundkorn) herstellen. Die Korngröße der Granulate liegt dabei im Bereich 2 bis 5 mm. Eine weitere, einfache Methode zur Erzeugung der Polymermischungen PM ist das Abmischen von Polymerdispersionen bzw. -suspensionen (enthaltend Polymerkomponente P1 und Polymerdispersionen, enthaltend die Polymerkomponente P2. Diese Dispersionsmischungen können gemeinsam koaguliert werden, gemeinsam sprühgetrocknet werden oder gemeinsam auf einem Extruder abgequetscht werden. Andererseits können die Dispersionsmischungen auch gemeinsam zu einem Film aufgetrocknet werden.
Bei den zahlengemäßen Angaben zur Zusammensetzung der erfindungsgemäßen Polymermischungen PM wurde nicht berücksichtigt, daß bei ihrer praktischen Anwendung an sich bekannte Zusatzstoffe wie Weichmacher, Farbstoffe und Pigmente, Filler, Gleitmittel, Stabilisatoren, zugefügt werden können. Als Zusatzstoffe können ganz allgemein die im "Taschenbuch der Kunststoff-Additive" R. Gächter und H. Müller, Carl Hanser Verlag München Wien, 2. Auflage 1983, aufgeführten Stabilisatoren, Hilfsstoffe, Weichmacher, Füllstoffe, Verstärkungsmittel und Farbmittel infrage. Insbesondere sei hingewiesen auf das Kapitel 3: Lichtschutzmittel für thermoplastische Kunststoffe S. 101 - 198. Bezüglich Zusatzstoffe vgl. auch Ullmann's Encyclopädie der Techn. Chemie, 4. Auflage Bd. 15, S. 253 - 273, Verlag Chemie 1978. Als Farbstoffe können insbesondere die im Ullmann loc. cit. Bd. 15, S. 275 - 279 dargestellten zur Anwendung kommen.

Neben den Polymerkomponenten P1 und P2 kann die Polymermischung PM eine weitere mit P1 und P2 unverträgliche Polymerkomponente P3 enthalten. In der Regel handelt es sich bei P3 um einen Gummi (z.B. Polybutadien oder Polybutylacrylat). Im allgemeinen wird dieser Gummi mit wenigstens einer der

beiden Polymerkomponenten (beispielsweise Polybutadien mit Polystyrol) wenigstens teilweise kovalent verknüpft sein. Mischungen mit P3-Zusatz sind also in der Regel zweiphasig: 1 Phase = verträgliche Polymermischung P1 und P2, 1 Phase = P3.

Vorteilhafte Wirkungen der Polymermischungen PM

Die erfindungsgemäßen verträglichen Polymermischungen PM weisen insbesondere die nachfolgenden Vorteile auf, die die entsprechenden technischen Einsatzmöglichkeiten nahelegen, wobei "Polystyrol" stellvertretend für die Polymeren P1 stehen soll. Im allgemeinen wird sich die Verwendung der erfindungsgemäßen verträglichen Mischungen PM an den Anwendungsmöglichkeiten von Polystyrol orientieren.

a) Ein primär zur Geltung kommender Vorteil ist die Verträglichkeit der Polymermischungen PM. Dies bedeutet optische und mechanische Vorzüge gegenüber unverträglichen Polymermischungen.

b) Im Unterschied zu den an sich weit besser verträglichen Polystyrol/Polycyclohexylmethacrylatmischungen, für die eine LCST gar nicht bestimmbar ist, zeigen die erfindungsgemäßen Polymermischungen PM eine LCST von in der Regel < 150 Grad C. Gegenüber Polycyclohexylmethacrylat zeichnen sich die erfindungsgemäßen Copolymeren jedoch durch deutlich verringerte Sprödigkeit aus. Da die Verträglichkeit insbesondere bei polystyrolreichen Mischungen gut ist, eignen sich die erfindungsgemäß anzuwendenden Copolymerisate P2 insbesondere zur Aufbringung in dünnen Schutzschichten auf Polystyrol. Damit sind auch die Probleme der Weiterverarbeitung von Abfällen weitgehend gelöst.

c) Aufgrund des ausgeprägten LCST-Verhaltens (das bisher für alle untersuchten Systeme PM bestätigt werden konnte) ergibt sich die Anwendung als optische Schalter (Vgl. DE-A 34 36 476)

d) Die Copolymeren P2 können als Verarbeitungshilfsmittel für Polystyrol eingesetzt werden. In diesem Falle empfiehlt sich die Mitverwendung von 1 - 10 Gew.-% eines thermostabilisierenden Comonomeren M insbesondere der Formel IV, worin bevorzugt R für Wasserstoff steht.

e) Von besonderem Interesse erscheint die Anwendung der erfindungsgemäßen Polymermischungen PM auf dem Lacksektor. Vorzugsweise enthält das Copolymerisat P2 in diesem Falle Comonomere M, insbesondere in Form funktioneller Monomere, z.B. die (Meth)acrylsäure, Dimethylaminoethyl(meth)-acrylat, Dimethylaminopropyl(meth)acrylat, Hydroxyethyl(meth)acrylat u.ä. Besonders hingewiesen sei auf Copolymerisate P2, worin $R_2$ für Methyl und $R_3$ für n-Butyl steht.

Die folgenden Beispiele dienen zur Erläuterung der Erfindung.

Die Viskosität $\eta$ wird nach DIN-Norm 7745, Teil 2, Abschnitt 3, bzw. ISO 1628/6 bestimmt.

Als Polymerkomponente P1 kann z.B. Polystyrol mit folgenden Spezifikationen zur Anwendung kommen: Homopolystyrol: J = 22 ml/g.

## BEISPIELE

$\alpha$) Herstellung der Copolymeren P2

Die Monomeren der Formeln II, III und gegebenenfalls M werden in einem Gefäß mit Rührer in den gewünschten Proportionen gemischt (vgl. Tabellen). Es werden unter Rühren 0,2 Gew.-% Lauroylperoxid (bezogen auf die Monomeren), 0,1 Gew.-% tert-Butylper-2-ethylhexanoat und ca. 0,3 Gew.-% Dodecylmercaptan zugesetzt. Die so erhaltene Mischung wird in einen Plastikbeutel (® HOSTAPHAN der Hoechst AG) verfüllt und im geschlossenen Beutel nach folgendem Schema polymerisiert: 44 - 65 Stunden bei 50 Grad C im Wasserbad, dann 17 Stunden Tempern bei 90 Grad C.

ß) Herstellung der Polymermischungen PM

Das Copolymerisat P2 wird zu 20 Gew.-% in Toluol gelöst und mit einer Lösung von Polystyrol (ebenfalls 20 Gew.-% in Toluol) gemischt. Aus den Mischungen werden Filme gegossen. Diese Filme werden zunächst 24 Stunden bei Raumtemperatur und danach 24 Stunden bei 50 Grad C im Vakuum getrocknet. Bildung glasklarer Filme zeigt Verträglichkeit an.

Die Ergebnisse aus $\alpha$) und ß) sind in den folgenden Tabellen wiedergegeben.

TABELLE 1:

| Beurteilung der Verträglichkeit von Mischungen aus Copolymerisat P2 aus Methylmethacrylat und n-Butylmethacrylat mit Polystyrol. | | | | | |
|---|---|---|---|---|---|
| Mischungsverhältnis | | | | | |
| Polymer P1* : Copolymer P2** | 95 : 5 | 90 : 10 | 80 : 20 | 50 : 50 | 20 : 80 |
| Verträglichkeit*** | + | + | + | + | + |

* Polystyrol $\eta$ = 22 ml/g
** Copolymerisat MMA/n-Butylmethacrylat 50 : 50 Gew.-Teile; $\eta$ = 53 ml/g
*** + Verträglich, ausgewiesen durch Bildung glasklarer Filme

TABELLE 2:

Beurteilung der Verträglichkeit von Mischungen aus Copolymerisaten P2 aus Methylmethacrylat und n-Decylmethacrylat mit Polystyrol als Funktion des Comonomerenverhältnisses.

| Zusammensetzung des Copolymeren P2 (Gew.-%) MMA | n-Decylmethacrylat | n (ml/g) | Mischungsverhältnis Copolymer P2 zu Polystyrol in der Polymermischung PM (Gew.-%) 2 : 98 | 5 : 95 | 10 : 90 | 20 : 80 | 50 : 50 | 80 : 20 |
|---|---|---|---|---|---|---|---|---|
| 20 | 80 | 47 | -* | - | - | - | - | - |
| 50 | 50 | 54 | - | - | - | - | - | - |
| 70 | 30 | 63 | +** | + | + | + | + | + |
| 80 | 20 | 54 | + | +/-*** | - | - | - | - |
| 80 | 20 | 38 | n.b.**** | n.b. | n.b. | +/- | - | - |
| 90 | 10 | 59 | n.b. | - | - | - | - | - |

*-: unverträglich, ausgewiesen durch trüben Film
**+: verträglich, ausgewiesen durch glasklaren Film
*** +/-: an der Grenze der Verträglichkeit, da bei Raumtemperatur verträglich, bei 50 Grad C beginnende Entmischung
****nb: nicht bestimmt

TABELLE 3:

| (Vergleichsbeispiel) Beurteilung der Verträglichkeit von Mischungen eines Copolymerisats aus Methylmethacrylat und Ethylmethacrylat. (Vergleichsversuche) | | | | | | | |
|---|---|---|---|---|---|---|---|
| Mischungsverhältnis | | | | | | | |
| Polymer* : Polystyrol (Gew.-%) | 5 : 95 | 10 : 90 | 20 : 80 | 50 : 50 | 80 : 20 | 90 : 10 | 95 : 5 |
| Verträglichkeit | - | - | - | - | - | - | - |
| Ergebnis: Das Copolymerisat aus MMA und Ethylmethacrylat ist mit Polystyrol unverträglich. | | | | | | | |

* Aus Methylmethacrylat und Ethylmethacrylat 50 : 50; n = 52 ml/g

TABELLE 4:

| Beurteilung der Verträglichkeit von Mischungen aus Copolymerisaten von Methylmethacrylat mit n-Hexylmethacrylat mit Polystyrol als Funktion der Comonomerzusammensetzung. | | | | | | | | | | |
|---|---|---|---|---|---|---|---|---|---|---|
| Comonomerzusammensetzung (Gew.-%) | | n (ml/g) | Mischungsverhältnis Copolymers zu Polystyrol (Gew.-%) | | | | | | | |
| Methylmethacrylat | n-Hexylmethacrylat | | 1 : 99 | 2 : 98 | 5 : 95 | 10 : 90 | 20 : 80 | 50 : 50 | 80 : 20 |
| 20 | 80 | 50 | -* | - | - | - | - | - | - |
| 20 | 80 | 32 | n.b.** | n.b. | n.b. | n.b. | - | - | - |
| 50 | 50 | 52 | +*** | + | + | + | + | (-)**** | (-) |
| 50 | 50 | 32 | n.b. | n.b. | n.b. | n.b. | + | (-) | (-) |
| 60 | 40 | 46 | + | + | + | + | + | + | + |
| 80 | 20 | 52 | +/-# | +/- | - | - | - | - | - |
| 80 | 20 | 33 | n.b. | n.b. | n.b. | n.b. | - | - | - |

*-: unverträglich
**n.b.: nicht bestimmt
***+: verträglich
****(-): Störungen beim Eintrocknen des Films. Deutliche Eintrübung beim Erwärmen auf 200 Grad C läßt bei Raumtemperatur auf Verträglichkeit schließen.
\# +/-: Grenze der Verträglichkeit

TABELLE 5:

Phasendiagramm einer erfindungsgemäßen Polymermischung PM. Entmischungstemperatur als Funktion der Zusammensetzung des Polymerblends. (Visuelle Bedurteilung von aus Toluol gegossenen Filmen).

Polymer P1: Poly-α-methylstyrol (MW: 50 000)
Polymer P2: Copolymeres aus 60 Gew.-% Methylmethacrylat und 40 Gew.-% Hexylmethacrylat (J = 46 ml/g)

| Zusammensetzung der Polymermischung PM | | Trübungstemperatur | Bemerkung |
|---|---|---|---|
| P1 (Gew.-%) | P2 (Gew.-%) | (Grad C) | |
| 95 | 5 | 168 | Blasen * |
| 90 | 10 | 160 | |
| 80 | 20 | 162 | |
| 70 | 30 | 167 | |
| 60 | 40 | 170 | |
| 50 | 50 | 176 | |
| 40 | 60 | 182 | Blasen |
| 30 | 70 | 184 | Blasen |
| 20 | 80 | > 190 | Blasen |
| 10 | 90 | > 190 | Blasen |
| 5 | 95 | > 190 | Blasen |

* Zersetzen des Poly-α-methylstyrol

## Patentansprüche

**1.** Verträgliche Polymermischungen PM, bestehend aus

(I) 0,1 - 99,9 Gew.-% eines Polymerisats P1, das aus Monomeren der Formel I

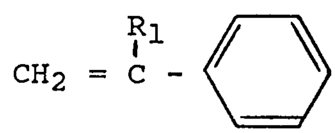

I

worin $R_1$ für Wasserstoff oder Methyl steht, aufgebaut ist und aus

(II) 99,9 - 0,1 Gew.-% eines Copolymerisats P2, das 30 - 90 Gew.-Teilen eines Methacrylsäureesters der Formel II

$$CH_2 = C(CH_3) - COOR_2 \qquad II$$

worin $R_2$ für Methyl oder Ethyl steht und aus 70 - 10 Gew.-Teilen eines Methacrylsäureesters der Formel III

$$CH_2 = C(CH_3) - COOR_3 \qquad III$$

worin $R_3$ für einen Kohlenwasserstoffrest mit 3 bis 24 Kohlenstoffatomen steht mit der Maßgabe, daß $R_3$ nicht für einen Cyclohexylrest stehen soll, und daß der Unterschied der Kohlenstoffzahl zwischen $R_2$ und $R_3$ größer 1 sein soll und aus 0 bis 10 Gew.-Teilen eines weiteren mit den Monomeren der

Formeln II und III copolymerisierbaren, von diesen verschiednen Monomeren M aufgebaut ist.

**2.** Verträgliche Polymermischungen gemäß Anspruch 1, dadurch gekennzeichnet, daß der relative Anteil der Monomeren der Formel III sich gegenläufig zur der Kohlenstoffzahl im Rest $R_3$ verhält.

**3.** Verträgliche Polymermischungen gemäß Anspruch 1, dadurch gekennzeichnet, daß $R_3$ für einen linearen Alkylrest mit 3 bis 24 Kohlenstoffatomen steht.

**4.** Verträgliche Polymermischungen gemäß den Ansprüchen 1 und 2, dadurch gekennzeichnet, daß sie eine "Lower Critical Solution Temperature" (LCST) aufweisen.

**5.** Verträgliche Polymermischungen gemäß Anspruch 4, dadurch gekennzeichnet, daß sie eine LCST von < 150 Grad C aufweisen.

**6.** Verträgliche Polymermischungen gemäß Anspruch 1, dadurch gekennzeichnet, daß $R_2$ für Methyl und $R_3$ für einen linearen Alkylrest mit 4 - 24 Kohlenstoffatomen steht.

**7.** Polymerkomposition, bestehend aus 40 - 99 Gew.-% der Polymermischung PM gemäß den Ansprüchen 1 bis 6 und 60 - 1 Gew.-% eines weiteren, von P1 und P2 chemisch unterscheidbaren Polymeren P3, das mit P1, P2 und PM unverträglich ist.

**8.** Gegenstände hergestellt unter Verwendung der verträglichen Polymermischungen PM gemäß den Ansprüchen 1 - 7.

**9.** Gegenstände aus den verträglichen Polymermischungen PM gemäß Anspruch 8, mit einem Überzug aus dem Polymeren P2.

**10.** Extrudierte Formkörper gemäß Anspruch 9.

**11.** Lösungen von Polymermischungen PM gemäß Anspruch 1, dadurch gekennzeichnet, daß sämtliche Polymerkomponenten in einem geeigneten Lösungsmittel oder Lösungsmittelsystem gelöst sind.

**12.** Verfahren zur Herstellung von Polymerfilmen, enthaltend die Polymermischung PM gemäß Anspruch 11, dadurch gekennzeichnet, daß man aus den Lösungen Polymerfilme herstellt.

**13.** Kunststoffdispersionen, die in ihrer Zusammensetzung den Polymermischungen PM gemäß Anspruch 1 entsprechen, dadurch gekennzeichnet, daß sie nebeneinander Latices aus den Polymeren P1 und P2 enthalten.

**14.** Verfahren zur Herstellung von Polymerfilmen enthaltend die Polymermischung PM gemäß Anspruch 1, dadurch gekennzeichnet, daß man die Filme aus der Kunststoffdispersion gemäß Anspruch 13 erzeugt.

**Claims**

**1.** Compatible polymer mixtures PM consisting of
(I) 0.1 - 99.9 wt.% of a polymer P1, which is synthesised from monomers of Formula I

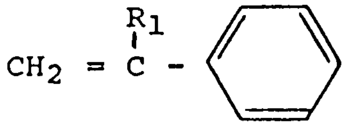

I

wherein $R_1$ represents hydrogen or methyl, and
(II) 99.9 - 0.1 wt.% of a copolymer P2, synthesised from 30 - 90 parts by weight of a methacrylic acid ester of Formula II

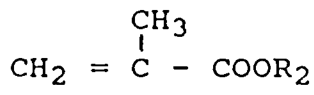 II

wherein $R_2$ represents methyl or ethyl, and 70 to 10 parts by weight of a methacrylic acid ester of Formula III

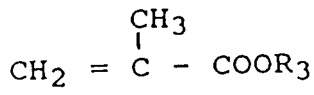 III

wherein $R_3$ represents a hydrocarbon group having 3 to 24 carbon atoms with the proviso that $R_3$ is not a cyclohexyl and that the difference in the number of carbons between $R_2$ and $R_3$ is more than 1, and 0 to 10 parts by weight of a further monomer M which may be compolymerised with but is different from the monomers of Formulae II and III.

**2.** Compatible polymer mixtures according to claim 1, characterised in that the relative amount of monomers of Formula III is in a reverse order to the number of carbons in the $R_3$ group.

**3.** Compatible polymer mixtures according to claim 1, characterised in that $R_3$ represents a linear alkyl group having 3 to 24 carbon atoms.

**4.** Compatible polymer mixtures according to claims 1 and 2, characterised in that they exhibit a "Lower Critical Solution Temperature" (LCST).

**5.** Compatible polymer mixtures according to claim 4, characterised in that they have an LCST of $< 150^{\circ}C$.

**6.** Compatible polymer mixtures according to claim 1, characterised in that $R_2$ represents methyl and $R_3$ represents a linear alkyl group having 4 - 24 carbon atoms.

**7.** A polymer composition consisting of 40 - 99 wt.% of the polymer mixture PM according to claims 1 to 6 and 60 - 1 wt.% of a further polymer P3, which may be distinguished from P1 and P2 chemically and is incompatible with P1, P2 and PM.

**8.** Objects produced by using the compatible polymer mixtures PM according to claims 1 to 7.

**9.** Objects made of the compatible polymer mixtures PM according to claim 8, having a coating made of polymer P2.

**10.** Extruded moulded bodies according to claim 9.

**11.** Solutions of polymer mixtures PM according to claim 1, characterised in that all the polymer components are dissolved in a suitable solvent or solvent system.

**12.** A method for preparing polymer films containing the polymer mixture PM according to claim 11, characterised in that polymer films are produced from the solutions.

**13.** Plastics dispersions which correspond, in their composition, to the polymer mixtures PM according to claim 1, characterised in that they contain lattices of the polymers P1 and P2.

**14.** A method for preparing polymer films containing the polymer mixtures PM according to claim 1, characterised in that the films are produced from the plastics dispersion according to claim 13.

## Revendications

1. Mélanges de polymères compatibles PM, se composant de
(1) 0,1 à 99,9% en poids d'un polymère P1 qui est constitué par des monomères de formule I

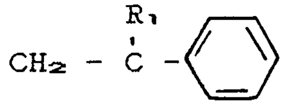

I

dans laquelle $R_1$ est mis pour un atome d'hydrogène ou un reste méthyle, et de
(II) 99,9 à 0,1% en poids d'un copolymère P2 qui est constitué par 30 à 90 parties en poids d'un ester d'acide méthacrylique de formule II

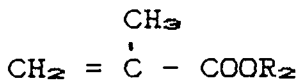

II

dans laquelle $R_2$ est mis pour un reste méthyle ou éthyle, par 70 à 10 parties en poids d'un ester d'acide méthacrylique de formule III

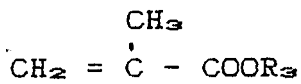

III

dans laquelle $R_3$ est mis pour un reste hydrocarboné à 3-24 atomes de carbone, étant spécifié que $R_3$ ne doit pas être mis pour un reste cyclohexyle et que la différence du nombre d'atomes de carbone entre $R_2$ et $R_3$ doit être supérieure à 1, et par 0 à 10 parties en poids d'un autre monomère M différent des monomères de formules II et III et copolymérisable avec ceux-ci.

2. Mélanges de polymères compatibles selon la revendication 1, caractérisés en ce que la part relative des mononères de formule III est en proportion inverse du nombre d'atomes de carbone dans le reste $R_3$.

3. Mélanges de polymères compatibles selon la revendication 1, cractérisés en ce que $R_3$ est mis pour un reste alkyle linéaire à 3-24 atomes de carbone.

4. Mélanges de polymères compatibles selon la revendication 1 ou 2, caractérisés en ce qu'ils présentent une température critique inférieure de solution (Lower Critical Solution Temperature = LCST).

5. Mélanges de polymères compatibles selon la revendication 4, caractérisés en ce qu'ils présentent une LCST inférieure à 150 ° C.

6. Mélanges de polymères compatibles selon la revendication 1, caractérisés en ce que $R_2$ est mis pour un reste méthyle et $R_3$ pour un reste alkyle linéaire à 4-24 atones de carbone.

7. Composition de polymères, se composant de 40 à 99% en poids du mélange de polymères PM selon l'une quelconque des revendications 1 à 6, et de 60 à 1% en poids d'un autre polymère P3 qui peut être distingué chimiquement de P1 et P2 et qui est incompatible avec P1, P2 et PM.

8. Objets fabriqués en utilisant les mélanges de polymères compatibles PM selon l'une quelconque des revendications 1 à 7.

9. Objets composés des mélanges de polymères compatibles PM selon la revendication 8, garnis d'un revêtement en polymère P2.

10. Corps moulés par extrusion selon la revendication 9.

**11.** Solutions de mélanges de polymères PM selon la revendication 1, caractérisées en ce que tous les composants polymères sont dissous dans un solvant ou un système de solvants approprié.

**12.** Procédé de fabrication de films de polymères contenant le mélange de polymères PM selon la revendication 11, caractérisé en ce qu'on fabrique des films de polymère à partir des solutions.

**13.** Dispersions de matière plastique qui correspondent, dans leur composition, aux mélanges de polymères PM selon la revendication 1, caractérisées en ce qu'elles contiennent conjointement des latex des polymères P1 et P2.

**14.** Procédé de fabrication de films de polymères contenant le mélange de polymères PM selon la revendication 1, caractérisé en ce qu'on produit les films à partir de la dispersion de matière plastique selon la revendication 13.